# EUROPEAN PATENT APPLICATION

(11) **EP 4 730 271 A1**
(43) Date of publication of application: **22.04.2026**
(21) Application number: 25208528.7
(22) Date of filing: 14.10.2025
(51) Int. Cl.: G06V 10/774, G06V 10/82, G06V 20/50

(54) **METHOD FOR GENERATING TRAINING DATA FOR TRAINING ARTIFICIAL NEURAL NETWORK MODEL AND ELECTRONIC DEVICE THEREFOR**

(30) Priority: 17.10.2024 KR 20240142419
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); SUNG, Myungchul, 06038 Seoul (KR); GWEON, Sungan, 06038 Seoul (KR); LEE, Kangsoo, 06038 Seoul (KR); LEE, Seongjin, 06038 Seoul (KR); YOU, Dongmin, 06038 Seoul (KR); HEO, Hoyeong, 06038 Seoul (KR); JO, Hanseok, 06038 Seoul (KR); LEE, Hwayoon, 06038 Seoul (KR)
(74) Representative: Studio Torta S.p.A.

(57) **Abstract**

A training data generation method for training an artificial neural network model including inputting a first prompt related to at least one first object in a specific context into a language model, acquiring first text data related to the at least one first object output from the language model, acquiring a first image related to the specific context, generating, based on at least one of the first text data or the first image, arrangement information related to an arrangement of the at least one first object for the first image, generating, based on at least one of the first text data, the first image, or the arrangement information, a second image in which the at least one first object is arranged in the first image, and outputting the second image.

## Description

### BACKGROUND

### Field

Aspects of the present disclosure relate to a method for generating training data for training an artificial neural network model and an electronic device supporting the same.

### Discussion of the Background

An autonomous driving system of a moving device may recognize objects existing in a driving environment by interpreting sensing data about the driving environment using an artificial neural network model. The object recognition of such an artificial neural network model may be directly related to the reliability of the autonomous driving system, and accordingly, technologies for improving the object recognition performance of the artificial neural network model have been proposed. For example, the artificial neural network model may be trained to recognize corresponding objects by receiving a dataset for objects that may exist in the driving environment of the moving device.

However, various types of unspecified objects may exist in the driving environment of the moving device, and their types or quantities are so vast that there may be realistic limitations in collecting datasets for the corresponding objects. In particular, it may be more difficult to artificially collect data for an object whose shape is difficult to define in advance in the real world, for example, an object with an irregular shape (or amorphous shape or non-standard shape) such as a fragment of an arbitrary object or a damaged part.

The above-described content is provided as background art for the purpose of aiding understanding of the present disclosure, and no assertion or determination is made as to whether the content may be applied as prior art related to the present disclosure.

### SUMMARY

The present disclosure provides a method for generating training data for training an artificial neural network model and an electronic device supporting the same to solve the above-described problems.

The technical problems to be solved by the present disclosure are not limited to the above-mentioned content, and other unmentioned problems will be clearly understood by those skilled in the art from the various embodiments described below.

The present disclosure may be implemented in various ways, including a method, an electronic device, and/or a computer program stored on a readable recording medium.

In some embodiments, a training data generation method for training an artificial neural network model is provided. The method is executed by at least one processor. The method includes inputting a first prompt related to at least one first object in a specific context into a language model, acquiring first text data related to the at least one first object output from the language model, acquiring a first image related to the specific context, generating, based on at least one of the first text data or the first image, arrangement information related to an arrangement of the at least one first object for the first image, generating, based on at least one of the first text data, the first image, or the arrangement information, a second image in which the at least one first object is arranged in the first image, and outputting the second image.

In some embodiments, the training data generation method may further include inputting a second prompt related to the at least one first object in the specific context into the language model at a second point in time different from a first point in time when the first prompt is input into the language model, wherein the first prompt and the second prompt may include same instruction information.

In some embodiments, the training data generation method may further include acquiring second text data related to the at least one first object output from the language model based on the second prompt, wherein the first text data and the second text data include description information that is at least partially different from each other in relation to the at least one first object in the specific context.

In some embodiments, the inputting the first prompt into the language model may include inputting the first prompt, which instructs a description of the at least one first object having an irregular shape in the specific context, into the language model.

In some embodiments, the acquiring the first text data may include acquiring the first text data describing at least one of a type, a size, or a shape of the at least one first object in the specific context.

In some embodiments, the acquiring the first text data may include acquiring the first text data describing an average value and a variance value for each of a width and a height of the at least one first object in the specific context.

In some embodiments, the acquiring the first image may include acquiring a camera parameter related to the first image.

In some embodiments, the generating the arrangement information may include determining, based on the camera parameter, a scale ratio of at least one second object included in the first image, and determining, based on at least one of the scale ratio or the first text data, a size of the at least one first object to be arranged in the first image.

In some embodiments, the acquiring the first image may include acquiring a depth map related to the first image.

In some embodiments, the generating the arrangement information may include determining, based on at least one of the depth map or the first text data, an arrangement position of the at least one first object to be arranged in the first image.

In some embodiments, the determining the arrangement position of the at least one first object may include identifying, based on the depth map, a first depth of at least one second object included in the first image, and determining the arrangement position of the at least one first object such that the at least one first object is arranged at a second depth shallower than the first depth in the first image.

In some embodiments, the training data generation method may further include training, based on the second image, the artificial neural network model related to an autonomous driving system of a moving device.

In some embodiments, the training the artificial neural network model may include training the artificial neural network model by inputting data of the second image into the artificial neural network model so that the artificial neural network model recognizes the at least one first object included in the second image.

In some embodiments, a non-transitory computer-readable recording medium storing a computer program for executing, on a computer, the aforementioned methods.

In some embodiments, an electronic device includes a memory storing instructions, and at least one processor, wherein the instructions, when executed by the at least one processor, cause the electronic device to input a first prompt related to at least one first object in a specific context into a language model, acquire first text data related to the at least one first object output from the language model, acquire a first image related to the specific context, generate, based on at least one of the first text data or the first image, arrangement information related to an arrangement of the at least one first object for the first image, generate, based on at least one of the first text data, the first image, or the arrangement information, a second image in which the at least one first object is arranged in the first image, and output the second image.

According to various embodiments of the present disclosure, in generating training data for an artificial neural network model to be trained to recognize a specific object, a mechanism may be provided that can variously define attributes such as the type, shape, and/or size of the specific object using a language model.

The effects of the present disclosure are not limited to the effects mentioned above, and other unmentioned effects will be clearly understood by those skilled in the art from the description of the claims.

### BRIEF DESCRIPTION OF THE DRAWINGS

Various embodiments of the present disclosure will be described with reference to the following drawings, and the same reference numerals may be assigned to the same or corresponding components in relation to the description of the drawings.
FIG. 1 illustrates an example of an operating environment of an electronic device according to an embodiment of the present disclosure.
FIG. 2 illustrates an example of an electronic device in a network environment according to an embodiment of the present disclosure.
FIG. 3 illustrates an example of components of an electronic device according to an embodiment of the present disclosure.
FIG. 4 illustrates an example of components of a processor according to an embodiment of the present disclosure.
FIG. 5 illustrates an example of acquiring text data by an electronic device according to an embodiment of the present disclosure.
FIG. 6 illustrates an example of generating arrangement information regarding an object by an electronic device according to an embodiment of the present disclosure.
FIG. 7 illustrates an example of determining an arrangement position regarding an object by an electronic device according to an embodiment of the present disclosure.
FIG. 8 illustrates an example of generating an image by an electronic device according to an embodiment of the present disclosure.
FIG. 9 illustrates an example of a method for generating training data for training an artificial neural network model according to an embodiment of the present disclosure.

### DETAILED DESCRIPTION

Hereinafter, specific details for implementing the present disclosure will be described in detail with reference to the accompanying drawings. However, in the following description, when it is determined that the subject matter of the present disclosure may be unnecessarily obscured, detailed descriptions of well-known functions or configurations will be omitted.

In the accompanying drawings, the same or corresponding components are assigned the same reference numerals. In addition, in the description of the following embodiments, a redundant description of the same or corresponding components may be omitted. However, even if a description of a component is omitted, the component is not intended to be excluded from any embodiment.

The advantages and features of the disclosed embodiments, and the methods for achieving them, will become clear with reference to the embodiments described later in conjunction with the accompanying drawings. However, the present disclosure is not limited to the embodiments disclosed below but may be implemented in various different forms, and these embodiments are provided only to make the present disclosure complete and to fully inform the scope of the invention to those skilled in the art.

The terms used in the present disclosure will be briefly explained, and the disclosed embodiments will be described in detail. The terms used in the present disclosure have been selected from generally widely used current terms, considering the functions in the present disclosure, but the terms may vary depending on the intention of a person skilled in the relevant art, precedent, or the emergence of new technology. In addition, in specific cases, there are also terms arbitrarily selected by the applicant, and in such cases, the meaning will be described in detail in the corresponding description of the invention. Therefore, the terms used in the present disclosure should be defined based on the meaning of the terms and the overall content of the present disclosure, not simply the name of the terms.

In the present disclosure, a singular expression includes a plural expression unless it is specifically stated to be singular in the context. In addition, a plural expression includes a singular expression unless it is specifically stated to be plural in the context. Throughout the present disclosure, when a part is said to include a certain component, it means that the part may further include other components, not excluding other components, unless there is a specific statement to the contrary.

In the present disclosure, the term 'module' or 'part' means a software or hardware component, and the 'module' or 'part' performs certain roles. However, the 'module' or 'part' is not limited to software or hardware. A 'module' or 'part' may be configured to be in an addressable storage medium and may also be configured to execute one or more processors. Thus, for example, a 'module' or 'part' may include at least one of software components, object-oriented software components, class components, and task components, as well as processes, functions, attributes, procedures, subroutines, segments of program code, drivers, firmware, microcode, circuits, data, databases, data structures, tables, arrays, or variables. The functions provided within the components and 'modules' or 'parts' may be combined into a smaller number of components and 'modules' or 'parts' or further separated into additional components and 'modules' or 'parts'.

According to an embodiment, a 'module' or 'part' may be implemented as a processor and a memory. A 'processor' should be broadly interpreted to include a general-purpose processor, a central processing unit (CPU), a microprocessor, a digital signal processor (DSP), a controller, a microcontroller, a state machine, etc. In some circumstances, a 'processor' may also refer to an application-specific integrated circuit (ASIC), a programmable logic device (PLD), a field programmable gate array (FPGA), etc. A 'processor' may also refer to a combination of processing devices, such as, for example, a combination of a DSP and a microprocessor, a combination of a plurality of microprocessors, a combination of one or more microprocessors coupled with a DSP core, or any other such configuration. In addition, a 'memory' should be broadly interpreted to include any electronic component capable of storing electronic information. A 'memory' may refer to various types of processor-readable media, such as random access memory (RAM), read-only memory (ROM), non-volatile random access memory (NVRAM), programmable read-only memory (PROM), erasable-programmable read-only memory (EPROM), electrically erasable PROM (EEPROM), flash memory, magnetic or optical data storage devices, registers, etc. A memory is said to be in electronic communication with a processor if the processor can read information from and/or write information to the memory. A memory integrated into a processor is in electronic communication with the processor.

Terms such as first, second, A, B, (a), (b), etc., used in the present disclosure are used only to distinguish one component from another, and the essence, order, or sequence of the corresponding component is not limited by the term.

When it is described in the present disclosure that a component is 'connected' or 'coupled' to another component, it should be understood that the component may be directly connected or accessed to the other component, but another component may be 'connected', 'coupled', or 'accessed' between each component.

'Includes' and/or 'including' used in the present disclosure do not exclude the presence or addition of one or more other components, steps, operations, and/or elements to the mentioned components, steps, operations, and/or elements.

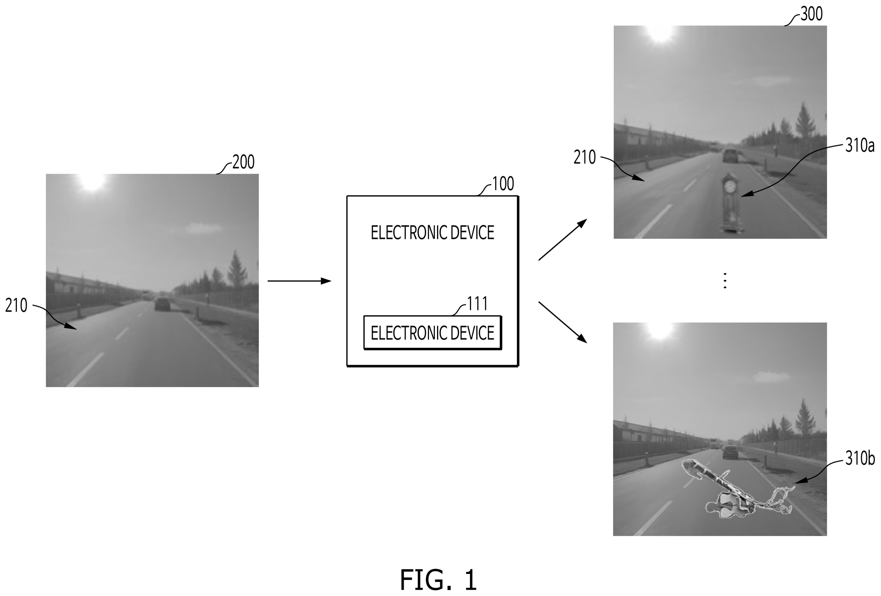

FIG. 1 illustrates an example of an operating environment of an electronic device according to an embodiment of the present disclosure. Referring to FIG. 1, an electronic device 100 according to an embodiment may generate training data for training an artificial neural network model. For example, the electronic device 100 may generate image-based training data to train an artificial neural network model related to an autonomous driving system of various types of moving devices (for example, vehicles, ships, and/or aircraft). However, the present disclosure is not limited thereto.

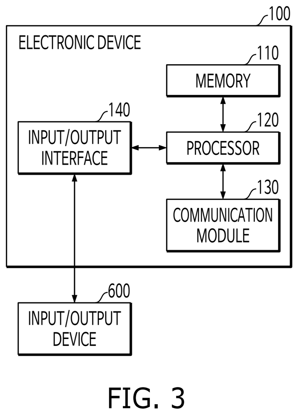

In an embodiment, the electronic device 100 may use a language model 111 stored in a recording device (for example, the memory 110 of FIG. 3) as at least part of the operation of generating training data. For example, the electronic device 100 may define at least one object in a specific context (for example, a driving environment of a moving device) to be included in image-based training data using the language model 111. In an embodiment, the definition of the at least one object may mean the acquisition of description (or, depiction) information about the at least one object, and such description information may be included in text data output (or, generated) by the language model 111. In this regard, the electronic device 100 may input a prompt instructing a description of at least one object in a specific context into the language model 111 and acquire text data output from the language model 111 based on the prompt.

According to an embodiment, the electronic device 100 may input a prompt into the language model 111 that instructs a description of at least one object that has a low probability of existing in a specific context in the real world or has a low correlation with the specific context. In such a case, the text data output from the language model 111 based on the corresponding prompt may include description information about at least one object with a low relevance to the specific context, such as a grandfather clock, a vending machine, a mattress, a desk, and/or a desktop computer. Alternatively, the electronic device 100 may input a prompt into the language model 111 that instructs a description of at least one object that has an irregular shape whose form is difficult to define in advance in the real world or whose identity is unclear and thus difficult to classify into a specific category. In such a case, the text data output from the language model 111 based on the corresponding prompt may include description information about at least one object such as an irregularly entangled steel structure and/or a damaged part of a moving device.

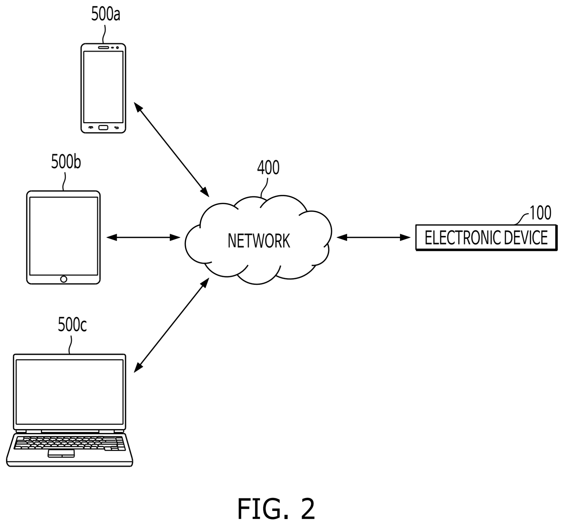

In an embodiment, the electronic device 100 may generate training data using the text data acquired from the language model 111. For example, the electronic device 100 may acquire a first image 200 representing a specific context (for example, a driving environment 210 of a moving device) and generate, as training data, a second image 300 in which at least one object defined by the text data (for example, a grandfather clock 310a or a damaged part 310b of a moving device) is arranged in an area of the first image 200. According to various embodiments, the electronic device 100 may generate a third image representing the at least one object (for example, 310a or 310b) or acquire the third image from a database stored in the recording device 110, and perform image processing (for example, synthesis) on the first image 200 and the third image to generate the second image 300. Alternatively, the electronic device 100 may request and receive a third image corresponding to the at least one object (for example, 310a or 310b) from an external electronic device connected via a network (for example, the network 400 of FIG. 2) and perform image processing on the first image 200 and the third image to generate the second image 300.

In an embodiment, the electronic device 100 may train (or, fine-tune) an artificial neural network model based on the generated second image 300. In this regard, the artificial neural network model may be stored in the recording device 110, and the electronic device 100 may train the artificial neural network model by inputting data of the second image 300 into the artificial neural network model so that the artificial neural network model recognizes the at least one object (for example, 310a or 310b) included in the second image 300. Alternatively, the artificial neural network model may be stored in an external electronic device connected to the electronic device 100 via the network 400, and the electronic device 100 may provide (or, transmit) the data of the second image 300 to the external electronic device and request that the external electronic device train the artificial neural network model based on the data of the second image 300.

FIG. 2 illustrates an example of an electronic device in a network environment according to an embodiment of the present disclosure. Referring to FIG. 2, an electronic device 100 according to an embodiment may include at least one system capable of providing a data processing service (for example, a training data generation service based on a language model for training an artificial neural network model). In an embodiment, the electronic device 100 may include at least one server device and/or database capable of storing, providing, and executing computer-executable programs (for example, downloadable applications) and data related to the data processing service, or at least one distributed computing device and/or distributed database based on a cloud computing service. For example, the electronic device 100 may include a separate system (for example, a server) for the data processing service.

In an embodiment, the data processing service provided by the electronic device 100 may be provided to a user through a data processing application and/or a web browser application installed on each of a plurality of user terminals 500a, 500b, and/or 500c.

In an embodiment, the electronic device 100 may communicate with the plurality of user terminals 500a, 500b, and/or 500c via a network 400. The network 400 may be configured to support communication between the electronic device 100 and the plurality of user terminals 500a, 500b, and/or 500c. Depending on the installation environment, the network 400 may be configured as a wired network including at least one of Ethernet, power line communication, telephone line communication device, and RS-serial communication, a wireless network including at least one of a mobile communication network, wireless LAN (WLAN), Wi-Fi, Bluetooth, and ZigBee, or a combination thereof. The communication method is not limited, and may include not only communication methods utilizing a communication network that the network 400 can include (for example, mobile communication network, wired internet, wireless internet, broadcasting network, and/or satellite network), but also short-range wireless communication between the electronic device 100 and the plurality of user terminals 500a, 500b, and/or 500c.

FIG. 3 illustrates an example of components of an electronic device according to an embodiment of the present disclosure. Referring to FIG. 3, an electronic device 100 according to an embodiment may include any computing device on which an application can be executed and which is capable of wired and/or wireless communication. In an embodiment, the electronic device 100 may include a memory 110, at least one processor 120, a communication module 130, and an input/output interface 140.

In an embodiment, the memory 110 may include any non-transitory computer-readable recording medium. According to an embodiment, the memory 110 may include a permanent mass storage device such as a read only memory (ROM), a disk drive, a solid state drive (SSD), and a flash memory. As another example, a permanent mass storage device such as a ROM, SSD, flash memory, and disk drive may be included in the electronic device 100 as a separate permanent storage device distinct from the memory 110. In addition, an operating system and at least one program code may be stored in the memory 110.

These software components may be loaded from a separate computer-readable recording medium from the memory 110. Such a separate computer-readable recording medium may include a recording medium that can be directly connected to the electronic device 100, for example, a computer-readable recording medium such as a floppy drive, disk, tape, DVD/CD-ROM drive, and memory card. As another example, the software components may be loaded into the memory 110 through the communication module 130 instead of a computer-readable recording medium. For example, at least one program may be loaded into the memory 110 based on a computer program installed by files provided through a network (for example, the network 400 of FIG. 2) by developers or a file distribution system that distributes installation files of an application.

The at least one processor 120 may be configured to process instructions of a computer program by performing basic arithmetic, logic, and input/output operations. Instructions may be provided to the at least one processor 120 by the memory 110 or the communication module 130. For example, the at least one processor 120 may be configured to execute received instructions according to program code stored in a recording device such as the memory 110.

The communication module 130 may provide a configuration or function for the electronic device 100 to communicate with an external electronic device (for example, the plurality of user terminals 500a, 500b, and/or 500c of FIG. 2 and/or a separate cloud system) via the network 400. For example, a request or data generated by the at least one processor 120 of the electronic device 100 according to program code stored in a recording device such as the memory 110 may be transmitted to the external electronic device via the network 400 under the control of the communication module 130. Conversely, a control signal or command provided from the external electronic device may be received by the electronic device 100 through the communication module 130 of the electronic device 100 via the network 400.

The input/output interface 140 may be a means for interfacing with an input/output device 600. As an example, the input device of the input/output device 600 may include a device such as a camera including an audio sensor and/or an image sensor, a keyboard, a microphone, and/or a mouse, and the output device of the input/output device 600 may include a device such as a display, a speaker, and/or a haptic feedback device. As another example, the input/output interface 140 may be a means for interfacing with a device in which a configuration or function for performing input and output, such as a touchscreen, is integrated into one. For example, when the at least one processor 120 of the electronic device 100 processes instructions of a computer program loaded into the memory 110, a service screen configured using information and/or data provided by an external electronic device may be displayed on a display via the input/output interface 140. Although FIG. 3 illustrates that the input/output device 600 is not included in the electronic device 100, the present disclosure is not limited thereto, and the input/output device 600 may be configured as a single device with the electronic device 100. In addition, although FIG. 3 illustrates that the input/output interface 140 is a component configured separately from the at least one processor 120, the present disclosure is not limited thereto, and the input/output interface 140 may be configured to be included in the at least one processor 120.

According to various embodiments, the electronic device 100 may omit at least some of the above-described components or may further include other additional components. For example, the electronic device 100 may further include other components such as a transceiver, a Global Positioning System (GPS) module, a camera, various sensors, and/or a database.

In an embodiment, while a program related to the generation of training data for training an artificial neural network model is being executed, the at least one processor 120 may receive text, images, video, voice, and/or motion input or selected through input devices such as a touchscreen, keyboard, a camera including an audio sensor and/or an image sensor, and a microphone connected to the input/output interface 140. In addition, the at least one processor 120 of the electronic device 100 may store the received text, image, video, voice, and/or motion in the memory 110, or provide the received text, image, video, voice, and/or motion to an external electronic device through the communication module 130 and the network 400.

The at least one processor 120 of the electronic device 100 may be configured to manage, process, and/or store signals, data, and/or information received from the input/output device 600 and/or an external electronic device. The signals, data, and/or information processed by the at least one processor 120 may be provided to the external electronic device through the communication module 130 and the network 400. The at least one processor 120 of the electronic device 100 may transmit and output signals, data, and/or information to the input/output device 600 through the input/output interface 140. For example, the at least one processor 120 may display the received signals, data, and/or information on a screen of the electronic device 100.

A method for generating training data for training an artificial neural network model according to various embodiments of the present disclosure may be executed by the at least one processor 120 of the electronic device 100.

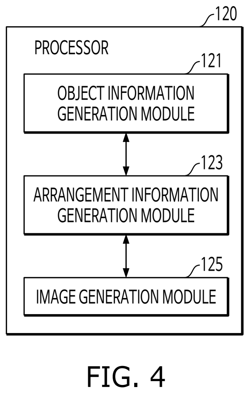

FIG. 4 illustrates an example of components of a processor according to an embodiment of the present disclosure. Referring to FIG. 4, the at least one processor 120 of an electronic device (for example, the electronic device 100 of FIG. 1, FIG. 2, and/or FIG. 3) according to an embodiment may include an object information generation module 121, an arrangement information generation module 123, and an image generation module 125.

In various embodiments, the at least one processor 120 may omit at least some of the above-described components or may further include other additional components. For example, at least some of the object information generation module 121, the arrangement information generation module 123, or the image generation module 125 may be integrated into a single component. In such a case, the single integrated component may perform the same or similar functions and/or operations as each component before integration.

According to various embodiments, some of the object information generation module 121, the arrangement information generation module 123, and the image generation module 125 may be included in a different processor distinct from the processor 120. For example, some modules that perform relatively large-scale computations among the object information generation module 121, the arrangement information generation module 123, and the image generation module 125 may be included in a first processor having a first computing capability (for example, a graphics processing unit (GPU), a neural network processing unit (NPU), and/or a tensor processing unit (TPU)), and other modules may be included in a second processor having a second computing capability (for example, a central processing unit (CPU)).

In various embodiments, at least one of the object information generation module 121, the arrangement information generation module 123, or the image generation module 125 may be implemented as an application-specific integrated circuit (ASIC). In various embodiments, at least one of the object information generation module 121, the arrangement information generation module 123, or the image generation module 125 may include at least one unit implemented in hardware, software, or firmware. The term module mentioned in various embodiments of the present disclosure may be compatible with terms such as logic, a logic block, a component, or a circuit.

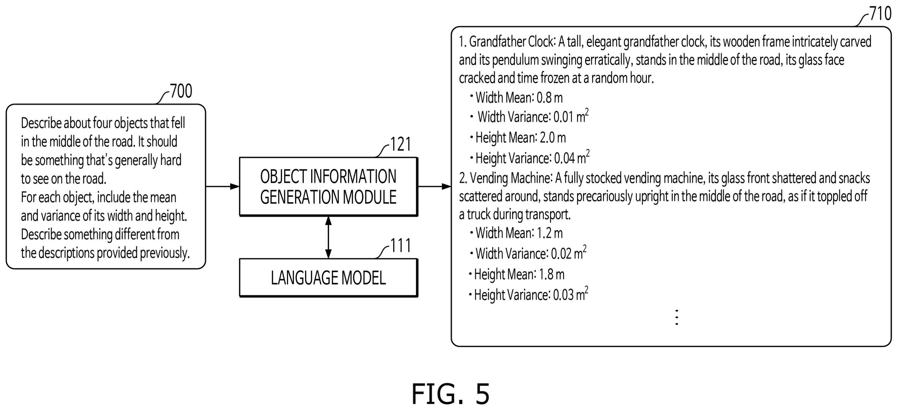

Hereinafter, embodiments regarding the function and/or operation of each of the object information generation module 121, the arrangement information generation module 123, and the image generation module 125 will be described with reference to FIGS. 5-8.

FIG. 5 illustrates an example of acquiring text data by an electronic device according to an embodiment of the present disclosure. Referring to FIG. 5, an object information generation module 121 may acquire a prompt 700 based on a user input to an electronic device (for example, the electronic device 100 of FIG. 1, FIG. 2, and/or FIG. 3). For example, upon receiving a user input instructing the generation of training data for training an artificial neural network model, the object information generation module 121 may acquire data of the prompt 700 from a recording device (for example, the memory 110 of FIG. 3) or an external electronic device connected via a network (for example, the network 400 of FIG. 2).

In an embodiment, the data of the prompt 700 may include specialized instruction information for acquiring description information about at least one object in a specific context (for example, a driving environment of a moving device). For example, the data of the prompt 700 may include at least one of information about a specific context (for example, in the middle of the road), correlation information between the specific context and the at least one object (for example, generally hard to see on the road), information on the number of at least one object to be described (for example, four objects), or request information about the size of the at least one object to be described (for example, mean and variance of its width and height).

In an embodiment, the object information generation module 121 may input the data of the prompt 700 into a language model 111 and acquire text data 710 output (or, generated) from the language model 111 based on the prompt 700. In various embodiments, the language model 111 may classify the instruction information included in the prompt 700 into grammatical units (for example, words, phrases, and/or morphemes) and analyze the grammatical elements or linguistic features for each unit to determine the meaning of the instruction information, thereby outputting text data 710 that responds to the meaning. According to various embodiments, the language model 111 may include a large language model, a small language model, or a large multimodal model modeled based on a neural network.

In an embodiment, the text data 710 acquired from the language model 111 may include description information about at least one object in a specific context. For example, the text data 710 may include at least one of information about the type of the at least one object (for example, grandfather clock), information about the shape of the at least one object (for example, its wooden frame intricately carved and its pendulum swinging erratically, stands in the middle of the road, its glass face cracked and time frozen at a random hour), or information about the size of the at least one object (for example, width mean, width variance, height mean, and height variance).

In various embodiments, the data of the prompt 700 may further include request information regarding the description of the at least one object. For example, the data of the prompt 700 may include information requesting the language model 111 to provide description information (or, text data) that is at least partially different from the description information provided at a previous point in time for the same prompt data input at different points in time (for example, describe something different from the description provided previously). In such a case, even if the data of a first prompt input into the language model 111 at a first point in time and the data of a second prompt input into the language model 111 at a second point in time different from the first point in time are the same, the first text data output from the language model 111 based on the first prompt and the second text data output from the language model 111 based on the second prompt may be at least partially different from each other. For example, the description information about the at least one object in the specific context included in the first text data and the description information about the at least one object in the specific context included in the second text data may be at least partially different. Accordingly, the electronic device 100 may acquire various description information about at least one object in a specific context based on a single prompt, and may efficiently generate a large amount of training datasets for the artificial neural network model based on the description information.

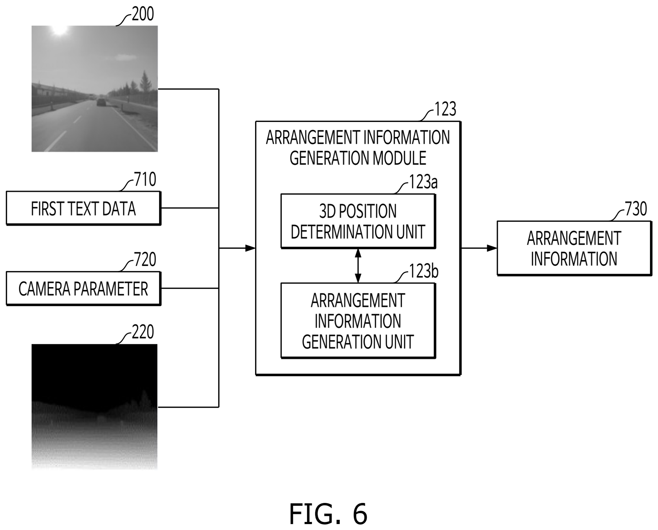

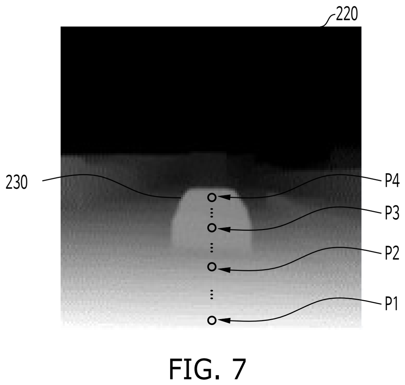

FIG. 6 illustrates an example of generating arrangement information regarding an object by an electronic device according to an embodiment of the present disclosure. FIG. 7 illustrates an example of determining an arrangement position regarding an object by an electronic device according to an embodiment of the present disclosure. Referring to FIG. 6, an arrangement information generation module 123 according to an embodiment may acquire at least one of a first image 200 representing a specific context (for example, a driving environment of a moving device), text data 710 output from a language model (for example, the language model 111 of FIG. 5), a camera parameter(s) 720 related to the first image 200, or a depth map 220 related to the first image 200.

According to an embodiment, the arrangement information generation module 123 may acquire text data 710 generated based on a prompt (for example, the prompt 700 of FIG. 5) from an object information generation module (for example, the object information generation module 121 of FIG. 5). In addition, the arrangement information generation module 123 may acquire at least one of data of the first image 200, camera parameter 720 information of a camera device that generated the data of the first image 200, or depth map 220 data including depth information for a plurality of pixels of the first image 200 through various paths. For example, the arrangement information generation module 123 may acquire at least one of the data of the first image 200, the camera parameter 720 information, or the depth map 220 data from at least one of a database of a recording device (for example, the memory 110 of FIG. 3), an external electronic device connected via a network (for example, the network 400 of FIG. 2), or a camera device (for example, the input/output device 600 of FIG. 3) connected via an input/output interface (for example, the input/output interface 140 of FIG. 3).

In an embodiment, the arrangement information generation module 123 may generate arrangement information 730 for at least one object in a specific context (hereinafter, referred to as at least one first object) defined (or, described) by the language model 111, using at least one of the acquired data of the first image 200, text data 710, camera parameter 720 information, or depth map 220 data. According to an embodiment, the arrangement information generation module 123 may include a 3D position determination unit 123a and an arrangement information generation unit 123b related to the generation of the arrangement information 730. In various embodiments, the 3D position determination unit 123a and the arrangement information generation unit 123b may also be integrated into a single component.

Referring to FIGS. 6 and 7, an arrangement information generation module 123 according to an embodiment may determine, as at least part of arrangement information 730, a size at which at least one first object will be arranged in a first image 200 representing a specific context. In this regard, a 3D position determination unit 123a of the arrangement information generation module 123 may determine a scale ratio of at least one object 230 (hereinafter, referred to as at least one second object) included in the first image 200. For example, the 3D position determination unit 123a may determine the scale ratio of the at least one second object 230 based on camera intrinsic parameters (for example, focal length, principal point, pixel size, and/or lens distortion coefficients representing the optical characteristics of the camera device) and camera extrinsic parameters (for example, rotation matrix and/or translation vector representing the relationship between the camera device and a 3D space coordinate system) indicated by the camera parameter 720 information.

In an embodiment, an arrangement information generation unit 123b of the arrangement information generation module 123 may determine the size at which the at least one first object will be arranged in the first image 200 based on scale ratio information for the at least one second object 230 determined by the 3D position determination unit 123a and description information included in the text data 710. For example, the arrangement information generation unit 123b may determine the size of the at least one first object to be arranged in the first image 200 by reducing or enlarging the real-world size indicated by the information regarding the size of the at least one first object included in the text data 710 (for example, width mean, width variance, height mean, and height variance) to correspond to the scale ratio of the at least one second object 230.

In an embodiment, the arrangement information generation module 123 may determine, as at least part of the arrangement information 730, a position where the at least one first object will be arranged in the first image 200 representing the specific context. In this regard, the 3D position determination unit 123a of the arrangement information generation module 123 may model the first image 200 in a 2D format into a 3D environment using the depth map 220 data, and may determine a plurality of first positions corresponding to the description information included in the text data 710 in the 3D environment. For example, the 3D position determination unit 123a may determine a plurality of first positions where the at least one first object can be located in the 3D environment (for example, a plurality of positions corresponding to the center surface of a traffic lane) based on the information regarding the shape of the at least one first object included in the text data 710 (for example, stands in the middle of the road).

In an embodiment, the arrangement information generation unit 123b of the arrangement information generation module 123 may map the plurality of first positions determined by the 3D position determination unit 123a to the depth map 220. In addition, the arrangement information generation unit 123b may determine a depth relationship between each of the plurality of first positions mapped to the depth map 220 and the at least one second object 230 included in the first image 200. For example, the arrangement information generation unit 123b may identify a first depth, which is the shallowest among a plurality of depths of the at least one second object 230, based on the depth information indicated by the depth map 220 data, and may identify a plurality of second positions mapped to the depth map 220 within a depth range shallower than the first depth among the plurality of first positions. According to an embodiment, the arrangement information generation unit 123b may determine any one of the identified plurality of second positions as the position where the at least one first object will be arranged. For example, the arrangement information generation unit 123b may randomly determine one position among the plurality of second positions, or may determine a position corresponding to the center of the plurality of second positions.

In various embodiments, the operation of determining the position where the at least one first object is to be arranged in the first image 200 within a depth range shallower than the depth of the at least one second object 230 included in the first image 200 can be understood as considering the learning efficiency of the artificial neural network model to be trained to recognize the at least one first object. For example, if the arrangement position of the at least one first object is determined within a depth range deeper than the depth of the at least one second object 230, at least a part of the at least one first object arranged at that position may be occluded by or overlap with the at least one second object 230, and in such a case, it may be difficult for the artificial neural network model to learn the overall shape of the at least one first object. However, the present disclosure is not limited to this, and the arrangement information generation unit 123b may also determine the arrangement position of the at least one first object within a depth range deeper than the depth of the at least one second object 230.

According to an embodiment, the arrangement information generation unit 123b may convert the 3D coordinates regarding the arrangement position of the at least one first object determined in the 3D environment into 2D coordinates for the first image 200.

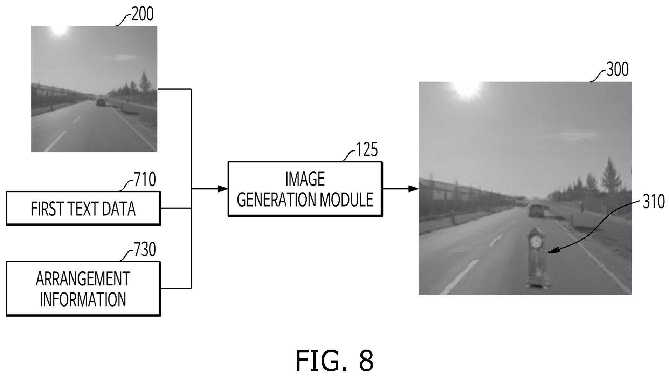

FIG. 8 illustrates an example of generating an image by an electronic device according to an embodiment of the present disclosure. Referring to FIG. 8, an image generation module 125 according to an embodiment may generate a second image 300 for training an artificial neural network model based on at least one of a first image 200 representing a specific context (for example, a driving environment of a moving device), text data 710 output from a language model (for example, the language model 111 of FIG. 5), or arrangement information 730 generated by an arrangement information generation module (for example, the arrangement information generation module 123 of FIG. 6). In this regard, the image generation module 125 may generate a third image representing the at least one object based on information regarding the type (for example, grandfather clock) and shape (for example, its wooden frame intricately carved and its pendulum swinging erratically, stands in the middle of the road, its glass face cracked and time frozen at a random hour) of the at least one object included in the text data 710, or may acquire the third image from a recording device (for example, the memory 110 of FIG. 3) or an external electronic device. For example, the image generation module 125 may generate a third image of a corresponding size based on arrangement size information of the at least one object included in the arrangement information 730. Alternatively, the image generation module 125 may scale the size of the third image acquired from the recording device 110 or the external electronic device based on the arrangement size information of the at least one object included in the arrangement information 730.

In an embodiment, the image generation module 125 may arrange (or, synthesize) the third image, which is generated or scaled based on the arrangement size information of the at least one object, into the first image 200. For example, the image generation module 125 may generate a second image 300 including at least one object 310 by arranging the third image at a specific position (or, coordinate) of the first image 200 based on the arrangement position information of the at least one object included in the arrangement information 730.

The generation of training data for an artificial neural network model according to the present disclosure, in other words, the generation of a second image 300 including at least one object 310, may be distinguished from LMD(language-model-diffusion)-based image generation in which a large language model and a diffusion model are combined. For example, in the generation of the second image according to various embodiments of the present disclosure, attributes such as the type, shape, and/or size of an object to be included in the second image may be defined by a language model based on a prompt that instructs a description of the object, whereas LMD-based image generation may require a prompt that directly defines the attributes of the object to be included in the image. In addition, in the generation of the second image according to various embodiments of the present disclosure, objects of various attributes may be defined by the language model based on a single prompt, whereas LMD-based image generation may require a separate prompt to define the attributes of the object to be included in the image depending on those attributes.

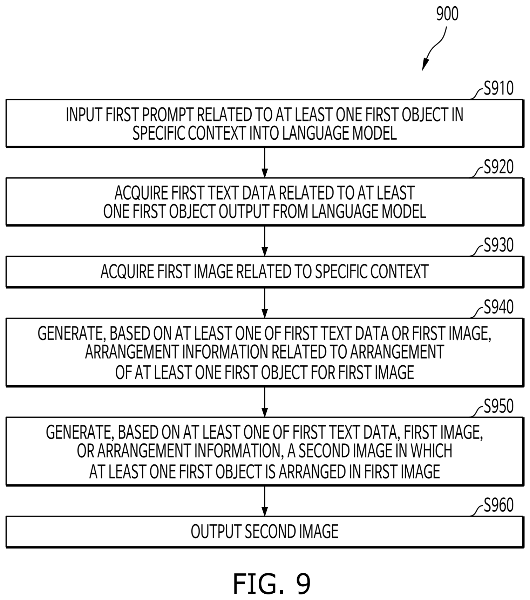

FIG. 9 illustrates an example of a method for generating training data for training an artificial neural network model according to an embodiment of the present disclosure. The steps of the method 900 for generating training data for training an artificial neural network model described in the embodiment of FIG. 9 may be performed sequentially or non-sequentially. For example, the order of the steps described in the embodiment of FIG. 9 may be changed, or at least two steps may be performed in parallel.

Referring to FIG. 9, in step S910, an electronic device (for example, the electronic device 100 of FIG. 1, FIG. 2, and/or FIG. 3) according to an embodiment may input a prompt (for example, the prompt 700 of FIG. 5) related to at least one object in a specific context (for example, a driving environment of a moving device) into a language model (for example, the language model 111 of FIG. 5). For example, the electronic device 100 may input the prompt 700, which includes specialized instruction information for acquiring description information about the at least one object in the specific context, into the language model 111. In various embodiments, the prompt 700 may include instruction information that instructs a description of at least one object that has a low probability of existing in the specific context in the real world or has a low correlation with the specific context. Alternatively, the prompt 700 may include instruction information that instructs a description of at least one object that has an irregular shape whose form is difficult to define in advance in the real world or whose identity is unclear and thus difficult to classify into a specific category.

In step S920, the electronic device 100 according to an embodiment may acquire text data (for example, the text data 710 of FIG. 5) related to the at least one object output (or, generated) from the language model 111. For example, the electronic device 100 may acquire the text data 710, which includes description information about the at least one object in the specific context according to the instruction information of the prompt 700, from the language model 111. In an embodiment, the description information of the text data 710 may include at least one of information about the type of the at least one object, information about the shape, or information about the size.

In step S930, the electronic device 100 according to an embodiment may acquire a first image (for example, the first image 200 of FIG. 6) related to the specific context. For example, the electronic device 100 may acquire data of the first image 200 representing a specific context (for example, a driving environment of a moving device) from at least one of a recording device (for example, the memory 110 of FIG. 3), an external electronic device connected via a network (for example, the network 400 of FIG. 2), or a camera device (for example, the input/output device 600 of FIG. 3) connected via an input/output interface (for example, the input/output interface 140 of FIG. 3). Additionally or alternatively, the electronic device 100 may further acquire, along with the data of the first image 200, at least one of camera parameter (for example, the camera parameter 720 of FIG. 6) information of a camera device that generated the data of the first image 200, or depth map (for example, the depth map 220 of FIG. 6) data including depth information for a plurality of pixels of the first image 200.

In step S940, the electronic device 100 according to an embodiment may generate arrangement information (for example, the arrangement information 730 of FIG. 6) related to the arrangement of the at least one object for the first image 200, based on at least one of the acquired text data 710 or the first image 200. For example, as at least part of generating the arrangement information 730, the electronic device 100 may determine a scale ratio of at least one object included in the first image 200, and based on the scale ratio and information regarding the size of the at least one object included in the text data 710 (for example, width mean, width variance, height mean, and height variance), determine the size at which the at least one object described (or, defined) by the language model 111 will be arranged in the first image 200.

In addition, as at least part of generating the arrangement information 730, the electronic device 100 may determine the position where the at least one object described by the language model 111 will be arranged in the first image 200, based on information regarding the shape of the at least one object included in the text data 710 (for example, stands in the middle of the road) and the depth information of the first image 200. For example, the electronic device 100 may determine the position of the at least one object to be arranged in the first image 200 within a depth range shallower than the depth of at least one object included in the first image 200.

In step S950, the electronic device 100 according to an embodiment may generate a second image (for example, the second image 300 of FIG. 8) in which at least one object is arranged in the first image 200, based on at least one of the text data 710, the first image 200, or the arrangement information 730. In this regard, the electronic device 100 may generate a third image representing the at least one object based on information regarding the type and shape of the at least one object included in the text data 710, or acquire the third image from the recording device 110 or an external electronic device. For example, the electronic device 100 may generate a third image of a corresponding size based on the arrangement size information of the at least one object included in the arrangement information 730, or may scale the size of the third image acquired from the recording device 110 or the external electronic device. In addition, the electronic device 100 may generate the second image 300 including the at least one object by arranging the third image at a specific position (or, coordinate) of the first image 200 based on the arrangement position information of the at least one object included in the arrangement information 730.

In step S960, the electronic device 100 according to an embodiment may output the generated second image 300. For example, the electronic device 100 may output the second image 300 through a display device included in the electronic device 100. Alternatively, the electronic device 100 may output the second image 300 using a display device connected through the input/output interface 140. Alternatively, the electronic device 100 may transmit data of the second image 300 to an external electronic device connected via the network 400 and request that the external electronic device output the second image 300.

The above-described method may be provided as a computer program stored on a computer-readable recording medium for execution on a computer. The medium may continuously store a computer-executable program or temporarily store the program for execution or download. In addition, the medium may be various recording means or storage means in the form of a single or several combined hardware, and is not limited to a medium directly connected to a computer system, but may be distributed on a network. Examples of the medium may include magnetic media such as hard disks, floppy disks, and magnetic tapes, optical recording media such as CD-ROMs and DVDs, magnetooptical media such as floptical disks, and those configured to store program instructions, including ROM, RAM, flash memory, etc. In addition, another example of a medium includes a recording medium or storage medium managed by an app store that distributes applications or a site, server, etc. that supplies or distributes various other software.

The methods, operations, or techniques of the present disclosure may also be implemented by various means. For example, such techniques may be implemented in hardware, firmware, software, or a combination thereof. Those of ordinary skill in the art will understand that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Those of ordinary skill in the art may implement the described functionality in varying ways for each particular application, but such implementation decisions should not be interpreted as causing a departure from the scope of the present disclosure.

In a hardware implementation, the processing units used to perform the techniques may be implemented within one or more ASICs, DSPs, digital signal processing devices (DSPDs), programmable logic devices (PLDs), field programmable gate arrays (FPGAs), processors, controllers, micro-controllers, microprocessors, electronic devices, other electronic units designed to perform the functions described in the present disclosure, a computer, or a combination thereof.

Accordingly, the various illustrative logical blocks, modules, and circuits described in connection with the present disclosure may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

In a firmware and/or software implementation, the techniques may be implemented as instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, a compact disc (CD), a magnetic or optical data storage device, etc. The instructions may be executable by one or more processors and may cause the processor(s) to perform certain aspects of the functionality described in the present disclosure.

When implemented in software, the above-described techniques may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium.

For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

Although the above-described embodiments have been described as utilizing aspects of the presently disclosed subject matter in one or more standalone computer systems, the present disclosure is not limited thereto and may be implemented in conjunction with any computing environment, such as a network or a distributed computing environment. Furthermore, aspects of the subject matter in the present disclosure may be implemented in a plurality of processing chips or devices, and storage may similarly be affected across a plurality of devices. Such devices may include PCs, network servers, and portable devices.

Although the present disclosure has been described in connection with some embodiments, various modifications and changes can be made without departing from the scope of the present disclosure, which can be understood by a person of ordinary skill in the technical field to which the invention of the present disclosure belongs. In addition, such modifications and changes should be considered to fall within the scope of the claims appended to the present disclosure.

## Claims

1. A training data generation method executed by at least one processor of an electronic device, the method comprising:
inputting a first prompt into a language model, wherein the first prompt is associated with at least one first object in a specific context;
acquiring first text data output from the language model, wherein the first text data is associated with the at least one first object;
acquiring a first image associated with the specific context;
generating, based on at least one of the first text data or the first image, arrangement information indicating an arrangement of the at least one first object for the first image;
generating, based on at least one of the first text data, the first image, or the arrangement information, a second image in which the at least one first object is arranged in the first image; and
outputting the second image for training an artificial neural network model.

2. The training data generation method as claimed in claim 1, further comprising:
inputting a second prompt into the language model at a second point in time different from a first point in time when the first prompt is input into the language model, wherein the second prompt is associated with the at least one first object in the specific context,
wherein the first prompt and the second prompt include same instruction information.

3. The training data generation method as claimed in claim 2, further comprising:
acquiring second text data output from the language model based on the second prompt, wherein the second text data is associated with the at least one first object,
wherein the first text data and the second text data include description information that is at least partially different from each other in relation to the at least one first object in the specific context.

4. The training data generation method as claimed in claim 1, wherein the first prompt instructs a description of the at least one first object having an irregular shape in the specific context.

5. The training data generation method as claimed in claim 1, wherein the acquiring the first text data comprises:
acquiring the first text data describing at least one of a type, a size, or a shape of the at least one first object in the specific context.

6. The training data generation method as claimed in claim 1, wherein the acquiring the first text data comprises:
acquiring the first text data describing an average value and a variance value for each of a width and a height of the at least one first object in the specific context.

7. The training data generation method as claimed in claim 1, wherein the acquiring the first image comprises:
acquiring a camera parameter associated with the first image.

8. The training data generation method as claimed in claim 7, wherein the generating the arrangement information comprises:
determining, based on the camera parameter, a scale ratio of at least one second object included in the first image; and
determining, based on at least one of the scale ratio or the first text data, a size of the at least one first object to be arranged in the first image.

9. The training data generation method as claimed in claim 1, wherein the acquiring the first image comprises:
acquiring a depth map associated with the first image.

10. The training data generation method as claimed in claim 9, wherein the generating the arrangement information comprises:
determining, based on at least one of the depth map or the first text data, an arrangement position of the at least one first object to be arranged in the first image.

11. The training data generation method as claimed in claim 10, wherein the determining the arrangement position of the at least one first object comprises:
identifying, based on the depth map, a first depth of at least one second object included in the first image; and
determining the arrangement position of the at least one first object such that the at least one first object is arranged at a second depth shallower than the first depth in the first image.

12. The training data generation method as claimed in claim 1, further comprising:
training, based on the second image, the artificial neural network model, wherein the artificial neural network model is associated with an autonomous driving system of a moving device.

13. The training data generation method as claimed in claim 12, wherein the training the artificial neural network model comprises:
training the artificial neural network model by inputting data of the second image into the artificial neural network model so that the artificial neural network model recognizes the at least one first object included in the second image.

14. A non-transitory computer-readable recording medium storing a computer program for executing, on a computer, the method according to claim 1.

15. An electronic device comprising:
a memory storing instructions; and
at least one processor,
wherein the instructions, when executed by the at least one processor, cause the electronic device to:
input a first prompt into a language model, wherein the first prompt is associated with at least one first object in a specific context;
acquire first text data output from the language model, wherein the first text data is associated with the at least one first object;
acquire a first image associated with the specific context;
generate, based on at least one of the first text data or the first image, arrangement information associated with an arrangement of the at least one first object for the first image;
generate, based on at least one of the first text data, the first image, or the arrangement information, a second image in which the at least one first object is arranged in the first image; and
output the second image.
